**Europäisches Patentamt**

**European Patent Office**

**Office européen des brevets**

(19)

(11) Veröffentlichungsnummer : **0 357 874 B1**

(12)

# EUROPÄISCHE PATENTSCHRIFT

(45) Veröffentlichungstag der Patentschrift :
**12.08.92 Patentblatt 92/33**

(51) Int. Cl.$^5$ : **B60K 15/04**

(21) Anmeldenummer : **89108644.9**

(22) Anmeldetag : **13.05.89**

(54) **Zapfpistolendichtung.**

(30) Priorität : **03.09.88 DE 3829948**

(43) Veröffentlichungstag der Anmeldung :
**14.03.90 Patentblatt 90/11**

(45) Bekanntmachung des Hinweises auf die
Patenterteilung :
**12.08.92 Patentblatt 92/33**

(84) Benannte Vertragsstaaten :
**AT DE ES FR GB IT**

(56) Entgegenhaltungen :
**EP-A- 0 245 613**
**EP-A- 0 311 756**
**DE-A- 3 641 274**
**US-A- 2 165 357**

(73) Patentinhaber : **Firma Carl Freudenberg**
**Höhnerweg 2-4**
**W-6940 Weinheim/Bergstrasse (DE)**

(72) Erfinder : **Beicht, Bernd**
**Schubertweg 7**
**W-6114 Gross Umstadt OT Rischen (DE)**
Erfinder : **Heinemann, Joachim**
**Gabelsbergerstrasse 47**
**W-6940 Weinheim (DE)**
Erfinder : **Keller, Frank**
**Holunderstrasse 4**
**W-6805 Heddesheim (DE)**
Erfinder : **Tinz, Reinhard**
**Ober Ramstädter Strasse 5**
**W-6101 Gross Biberau (DE)**

## Beschreibung

Die Erfindung betrifft eine Zapfpistolendichtung nach dem Oberbegriff von Anspruch 1.

Eine solche Zapfpistolendichtung ist aus dem deutschen Gebrauchsmuster G 87 10859.3 bekannt. Ihr Außendurchmesser ist erheblich größer als der Innendurchmesser der Mündung des Einfüllstutzens. Eine Montage durch die Mündung hindurch kann daher nicht erfolgen. Es ist vielmehr nötig, die Zapfpistolendichtung aus der Richtung des Kraftstoffbehälters in den Einfüllstutzen einzufügen, und somit in den Herstellprozeß desselben einzubinden. Das ist wenig befriedigend insofern, als Zapfpistolendichtungen der hier zur Diskussion stehenden Art lediglich zur Anwendung gelangen bei Kraftfahrzeugen, welche mit einem Katalysatormotor versehen sind. Bei Kraftfahrzeugen, die mit einem üblichen Verbrennungsmotor ausgestattet sind, ist die Verwendung entsprechender Dichtungen hingegen entbehrlich. Der KFZ-Hersteller, der sowohl Kraftfahrzeuge anbietet, welche mit Katalysatormotor ausgestattet sind, als auch solche mit einem üblichen Motor, ist daher gezwungen, zwei verschiedene Ausführungen von Kraftstoffbehältern zu bevorraten und zu montieren. Das ist mit einem erheblichen Aufwand verbunden.

Der Erfindung liegt die Aufgabe zugrunde, eine Zapfpistolendichtung zu zeigen, die je nach Bedarf problemlos nachträglich montiert werden kann.

Diese Aufgabe wird erfindungsgemäß bei einer Zapfpistolendichtung der eingangs genannten Art mit den kennzeichneten Merkmalen von Anspruch 1 gelöst.

Auf vorteilhafte Ausgestaltungen nehmen die Unteransprüche Bezug.

Bei der erfindungsgemäßen Zapfpistolendichtung ist der Dichtring in einem Stützkörper von im wesentlichen rohrförmiger Gestalt aufgenommen, wobei der Stützkörper zumindest in einem Teilbereich elastisch ausgebildet und durch eine reversible Durchmesserverminderung durch die Mündung in den Einfüllstutzen einführbar ist und wobei der Stützkörper mit wenigstem einem in radialer Richtung nach innen weisenden Vorsprung mit dem Einfüllstutzen in Eingriff bringbar und in axialer Richtung festlegbar ist. Die Montage der erfindungsgemäßen Zapfpistolendichtung kann folglich im Anschluß an die Fertigstellung des Kraftstoffbehälters durch die Mündung des Einfüllstutzens hindurch erfolgen, wobei durch die Festlegung an dem in radialer Richtung nach innen weisenden Vorsprung des Einfüllstutzens eine unverrückbare, axiale Festlegung in dem Einfüllstutzen gewährleistet ist. Den bestehenden Sicherheitserfordernissen wird hierdurch voll entsprochen und es genügt die Verwendung eines standardisierten Kraftstoffbehälters für alle Fälle.

Der Stützkörper kann zweigeteilt ausgebildet sein und einen nachgiebigen Außenring und einen davon umschlossenen Innenring aus einem unnachgiebigen Werkstoff umfassen, wobei der Innenring einen kleineren Außendurchmesser hat, als die Mündung und wobei der Innenring axial unverschiebbar an dem Außenring festlegbar ist. Der Außenring könnte in einem solchen Falle aus Weichgummi bestehen und der Innenring aus Blech oder einem harten Kunststoff. Hierdurch wird einerseits eine gute Abdichtung des Stützkörpers gegenüber der Innenwandung des Einfüllstutzens erreicht und andererseits eine gute Widerstandsfähigkeit des Stützkörpers im Hinblick auf die sich aus der gegenseitigen Berührung mit der Zapfpistole ergebende Verschleißbeanspruchung. Es besteht darüber hinaus die Möglichkeit, den Außenring gegebenenfalls auch aus einem Weichgummi zu erzeugen, der durch den Kraftstoff quellbar ist. In diesem Falle ergibt sich während der bestimmungsgemäßen Verwendung der erfindungsgemäßen Zapfpistolendichtung eine erhöhte Anpressung des Außenringes an die einander in radialer Richtung umschließenden, unnachgiebigen Begrenzungsflächen einerseits des Einfüllstutzens und andererseits des Innenringes, was das erzielte Abdichtergebnis nachhaltig verbessert. Insbesondere in Fällen, in denen die Begrenzungsflächen herstellungsbedingt gewisse Oberflächenunregelmäßigkeiten haben, beispielsweise Oberflächenriefen, ist das von großem Vorteil.

Der Außenring kann mit einer der Mündung zugewandten Stützfläche versehen sein, die den Innenring berührt, wenn der Innenring den Außenring mit einem in Richtung der Mündung weisenden, hohlkegelig erweiterten Ansatz überragt und wenn der Ansatz mit wenigstens einer sich in Längsrichtung erstreckenden Auftrennung versehen und hinter dem die Mündung verengenden Teil des Einfüllstutzens einschnappbar ist. Der Innenring ist hierdurch in axialer Richtung festgelegt zwischen der Stützfläche des Außenringes und dem die Mündung verengenden Teil des Einfüllstutzens. Das Auftreten von Relativverlagerungen ist dadurch völlig ausgeschlossen.

Die Stützfläche sollte bei einer solcher Ausführung zweckmäßig einen in Richtung der Mündung des Einfüllstutzens erweiterten Innendurchmesser haben. Nur in diesem Falle ergibt sich bei einer axialen Anpressung des Innenringes eine radial nach außen gerichtete Belastungskomponente, die eine feste Anpressung des Außenringes an die Innenwandung des Einfüllstutzens gewährleistet und als Folge hiervon eine besonders gute axiale Festlegung.

Der nach innen weisende Vorsprung des Einfüllstutzens, durch den der Stützkörper in axialer Richtung festgelegt wird, kann ringförmig geschlossen ausgebildet sein und beispielsweise die Form einer Sicke haben. Kostengünstiger anbringen läßt sich demgegenüber eine Ausführung, bei der der Vorsprung durch wenigstens zwei gleichmäßig in Umfangsrichtung verteilte Einwölbungen des Einfüllstutzens gebildet ist, welche beispielsweise von kalottenförmiger Gestalt sein können. Der zugehörige Außenring der Zapfpistolendichtung ist zweckmäßig auf seiner Außenseite mit einer umlaufenden Nute versehen, in welche die Einwölbungen bei der Montage eingreifen können.

Der Innenring kann zweigeteilt ausgebildet sein und ein Dichtungsaufnahmeglied und ein Schließglied umfassen, wobei das Dichtungsaufnahmeglied den Dichtring auf der dem Kraftstoffbehälter und der radial nach außen weisenden Seite mit einem winkelförmigen Profil umschließt und das Schießglied auf der der Mündung zugewandten Seite und wobei das Dichtungsaufnahmeglied und das Schließglied unverrückbar aneinander festlegbar sind. Das Dichtungsaufnahmeglied und Schließglied bilden somit gemeinsam eine nach innen offene Nut, in welche der Dichtring einfügbar ist. Dieser kann beispielsweise die Form eines üblichtes Nutringes haben mit einer axial in Richtung des Kraftstofftanks vorspringenden Dichtlippe. Der Ausstausch nach eventuell eingetretenem Verschleiß wird hierdurch vereinfacht.

Das Schließglied kann aus einem Hartwerkstoff bestehen und einen hohlkegelig von der Dichtung in Richtung der Mündung erweiterten Innendurchmesser aufweisen, wobei der kleinste Wert des Innendurchmessers im wesentlichen identisch ist mit dem Innendurchmesser des Dichtringes im Bereich des der Mündung zugewandten Endes. Der gewöhnlich aus weichelastischem Gummi bestehende Dichtring wird hierdurch gut geschützt vor den mechanischen Einwirkungen der Zapfpistole, während diese eingefügt und entnommen wird.

Das Schließglied kann rohrförmig ausgebildet und in eine Hinterschneidung des Dichtungsaufnahmegliedes einschnappbar sein. Neben einer kostengünstigen Herstellbarkeit wird hierdurch die Einführung erleichtert und ein fester Sitz erzielt.

Das Schließglied kann mit wenigstens einer axial vorspringenden Federzunge versehen und durch Einschnappen der Federzunge in eine Hinterschneidung des Dichtungsaufnahmegliedes an demselben festlegbar sein. Zweckmäßig sind mehrere Federzungen gleichmäßig in Umfangsrichtung verteilt und jeweils mit wenigstens einer Durchbrechung zum axialen Einsetzen eines Spannwerkzeuges versehen, wobei die Federzungen durch eine Betätigung des Spannwerkzeuges aus den Hinterschneidungen des Dichtungsaufnahmegliedes ausrastbar sind. Ein eventuell erforderliches Ausstauschen der Dichtung wird hierdurch weiter vereinfacht. Die Federzungen sollen sich dabei zweckmäßig axial in Richtung des Kraftstoffbehälters erstrecken. Sie vermögen bei einer solchen Anordnung das Einfügen und Entnehmen der Zapfpistole nicht zu behindern.

In der in der Anlage beigefügten Zeichnung ist eine beispielhafte Ausführung der erfindungsgemäßen Zapfpistolendichtung längsgeschnitten sowie in einer Ansicht durch den Einfüllstutzen dargestellt. Sie wird nachfolgend näher erläutert:

Die Zapfpistolendichtung ist zur Verwendung in dem mit einer Mündung reduzierten Durchmessers versehenen Einfüllstutzen 12 eines Kraftstoffbehälters vorgesehen, umfassend einen Dichtring 8 aus polymerem Werkstoff, der mit einer mit der Zapfpistole in Eingriff bringbaren Dichtlippe 4 versehen ist. Der Dichtring 8 ist in einem Stützkörper 13 von im wesentlichen rohrförmiger Gestalt aufgenommen, wobei der Stützkörper 13 zweigeteilt ausgebildet ist und einen Außenring 1 aus einem nachgiebigen Weichgummi umfaßt und einen davon umschlossene Innenring 2 aus einem unnachgiebigen Werkstoff, vorliegend einem solchen aus Blech. Der Innenring 2 hat im Bereich der axialen Erstreckung des Außenringes 1 einen kleineren Durchmesser als die Mündung 14 des Einfüllstutzens 12. Dieser ist im Bereich der kalottenförmigen Einwölbungen 3 des Einfüllstutzens 12 ringförmig in sich geschlossen ausgebildet und liegt durchgehend an der Innenseite des Außenringes 1 an. Eine axiale Relativverlagerung des Außenringes 1 in Bezug auf den Einfüllstutzen 12 ist hierdurch ausgeschlossen.

Fortschreitend in Richtung der Mündung berühren der Außenring 1 und der Innenring 2 einander im Bereich einer kegelig in Richtung der Mündung erweiterten Stützfläche 10. Über diese wird bei einer axialen Anpressung des Innenringes 2 an den Außenring 1 letzterer in radialer Richtung an die Innenwandung des Einfüllstutzens 12 angepreßt, was die Erzielung eines guten Abdichtungsergebnisses verbessert.

Der aus Blech bestehende Innenring 2 überragt den aus quellbarem Weichgummi bestehenden Außenring 1 mit einem in Richtung der Mündung 14 weisenden, hohlkegelig erweiterten Ansatz, der mit vier gleichmäßig in Umfangsrichtung verteilten, sich in Längsrichtung erstreckenden Auftrennungen 16 versehen und hinter dem die Mündung 14 verengenden Teil des Einfüllstutzens eingeschnappt ist. Auch in Richtung der Mündung ist dadurch eine Relativverlagerung des Innenringes 2 so gut wie ausgeschlossen.

Der Innenring 2 ist in sich ebenfalls zweigeteilt ausgebildet und umfaßt ein Dichtungsaufnahmeglied 18 und ein Schließglied 7. Das Dichtungsaufnahmeglied 18 umschließt den Dichtring auf der dem Kraftstoffbehälter und der radial nach außen weisenden Seite mit einem winkelförmigen Profil und das Schließglied 7 auf der der Mündung 14 zugewandten Seite, wobei das Dichtungsaufnahmeglied 18 und das Schließglied 7 unverrückbar aneinander festgelegt sind. Der als Nutring gestaltete Dichtring 8 wird hierdurch während der bestimmungsgemäßen Verwendung der erfindungsgemäßen Zapfpistolendichtung in einer nach innen offenen Nut gehalten, was einen Austausch nach vorausgegangenem Verschleiß vereinfacht.

EP 0 357 874 B1

Das Schließglied weist einen hohlkegelig von dem Dichtring 8 in Richtung der Mündung 14 des Einfüllstutzens 12 erweiterten Innendurchmesser auf, wobei der kleinste Wert des Innendurchmessers im wesentlichen identisch ist mit dem Innendurchmesser des Dichtringes 8 im Bereich seines der Mündung 14 zugewandten Endes. Der Dichtring wird hierdurch während der bestimmungsgemäßen Verwendung der Zapfpistolendichtung gut vor den mechanischen Einwirkungen der Zapfpistole geschützt, was die Gebrauchsdauer verbessert. Das Schließglied 7 ist zur Festlegung an dem Dichtungsaufnahmeglied mit drei axial in Richtung des Kraftstoffbehälters vorstehenden Federzungen 5 versehen und durch Einschnappen der Federzungen 5 in entsprechende Hinterschneidungen des Dichtungsaufnahmegliedes 18 an demselben festgelegt. Die Federzungen weisen dabei jeweils eine Durchbrechung 6 zum axialen Einsetzen eines nichtgezeigten Spannwerkzeuges auf und sind durch eine Betätigung des Spannwerkzeuges aus den Hinterschneidungen des Dichtungsaufnahmegliedes ausrastbar. Im Anschluß daran kann das Schließglied aus dem Dichtungsaufnahmeglied axial entnommen werden und sodann der eigentliche Dichtring 8. Nach Einsetzen eines neuen Dichtringes kann die Zusammenfügung des Schließgliedes mit dem Dichtungsaufnahmeglied in umgekehrter Reihenfolge vorgenommen werden.

Bei den gezeigten Ausführungsbeispielen ist der Innenring 2 mit einer sogenannten Bleifreiklappe 10 versehen, die bei nicht eingeführter Zapfpistole durch die Kraft einer Feder gegen das nach innen weisende Ende der Zapfpistolendichtung gepreßt wird. Dieses ist mit einer aus gummielastischem Werkstoff bestehenden Ringdichtung 11 versehen, die der Einwirkung der Zapfpistole nicht zugänglich ist. Auch bei langfristigem Gebrauch ist hierdurch keine Veränderung des Abdichtungsergebnisses zu erwarten, ein Austreten von Kraftstoffdämpfen durch den Einfüllstutzen weitestgehend ausgeschlossen.

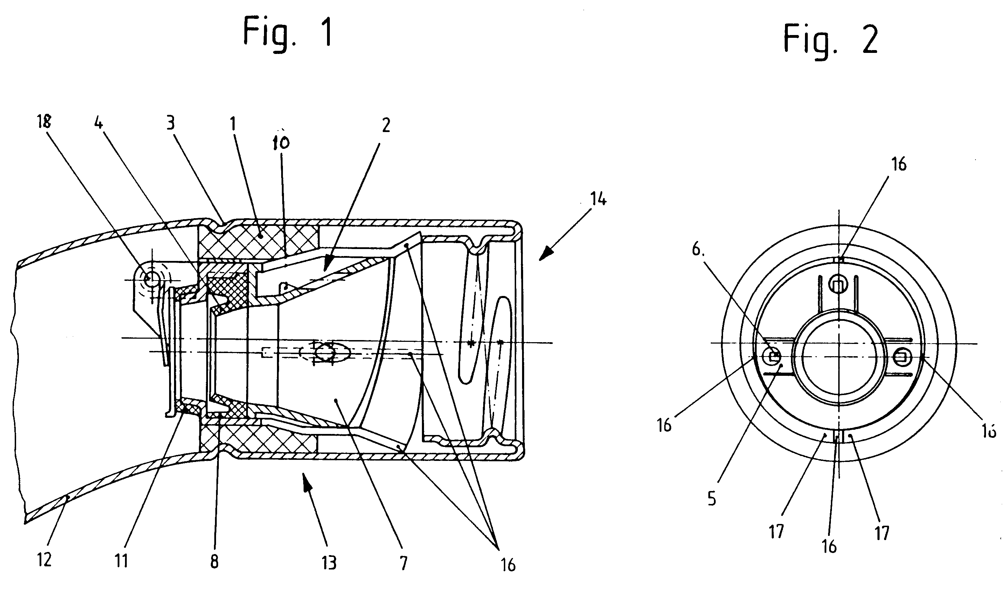

**Patentansprüche**

1. Zapfpistolendichtung zur Verwendung in dem mit einer Mündung reduzierten Durchmessers versehenen Einfüllstutzen (12) eines Kraftstoffbehälters, umfassend einen Dichtring (8) aus polymerem Werkstoff, der mit einer mit der Zapfpistole in Eingriff bringbaren Dichtlippe (4) versehen ist, dadurch gekennzeichnet, daß der Dichtring (8) in einem Stützkörper (13) von im wesentlichen rohrförmiger Gestalt aufgenommen ist, daß der Stützkörper (13) zumindest in einem Teilbereich elastisch ausgebildet und durch eine reversible Durchmesserverminderung durch die Mündung (14) in den Einfüllstutzen (12) einführbar ist und daß der Stützkörper (13) mit wenigstens einem in radialer Richtung nach innen weisenden Vorsprung (3) des Einfüllstutzens(12) in Eingriff bringbar und in axialer Richtung festlegbar ist.

2. Zapfpistolendichtung nach Anspruch 1, dadurch gekennzeichnet, daß der Stützkörper (13) zweigeteilt ausgebildet ist und einen Außenring (1) aus einem nachgiebigen und einen davon umschlossenen Innenring (2) aus einem unnachgiebigen Werkstoff umfaßt, daß der Innenring (2) einen kleineren Außendurchmesser hat als die Mündung (14) und daß der Innenring (2) axial unverschiebbar an dem Außenring (1) festlegbar ist.

3. Zapfpistolendichtung nach Anspruch 2, dadurch gekennzeichnet, daß der Außenring (1) aus Weichgummi besteht und der Innenring (2) aus Blech oder einem Hartkunststoff.

4. Zapfpistolendichtung nach Anspruch 2 bis 3, dadurch gekennzeichnet, daß der Außenring (1) mit einer der Mündung (14) zugewandten Stützfläche (10) versehen ist, die den Innenring (2) berührt, daß der Innenring (2) den Außenring (1) mit einem in Richtung der Mündung weisenden, hohlkegelig erweiterten Ansatz überragt und daß der Ansatz mit wenigstens einer sich in Längsrichtung erstreckenden Auftrennung (16) versehen und hinter dem die Mündung (14) verengenden Teil des Einfüllstutzens (12) einschnappbar ist.

5. Zapfpistolendichtung nach Anspruch 4, dadurch gekennzeichnet, daß die Stützfläche (10) einen kegelig in Richtung der Mündung erweiterten Innendurchmesser aufweist.

6. Zapfpistolendichtung nach Anspruch 1 bis 5, dadurch gekennzeichnet, daß der Vorsprung (3) durch wenigstens zwei gleichmäßig in Umfangsrichtung verteilte Einwölbungen des Einfüllstutzens (12) gebildet ist.

7. Zapfpistolendichtung nach Anspruch 6, dadurch gekennzeichnet, daß die Einwölbungen kalottenförmig gestaltet sind.

8. Zapfpistolendichtung nach Anspruch 1-7, dadurch gekennzeichnet, daß der Innenring (2) zweigeteilt ist und ein Dichtungsaufnahmeglied (18) und ein Schließglied (7) umfaßt, daß das Dichtungsaufnahmeglied (18) den Dichtring (8) auf der dem Kraftstoffbehälter und der radial nach außen weisenden Seite mit einem winkelförmigen Profil umschließt und das Schließglied (7) auf der der Mündung zugewandten Seite und daß das Dichtungsaufnahmeglied (18) und das Schließglied (7) unverrückbar aneinander festlegbar sind.

9. Zapfpistolendichtung nach Anspruch 8, dadurch gekennzeichnet, daß das Schließglied (7) einen hohlkegelig von dem Dichtring (8) in Richtung der Mündung (14) erweiterten Innendurchmesser aufweist und daß der kleinste Wert des Innendurchmessers im wesentlichen identisch ist mit dem Innendurchmesser des Dichtringes (8) im Bereich des der Mündung (14) zugewandten Endes.

4

10. Zapfpistolendichtung nach Anspruch 9, dadurch gekennzeichnet, daß das Schließglied (7) rohrförmig ausgebildet und in eine Hinterschneidung des Dichtungsaufnahmegliedes (18) einschnappbar ist.

11. Zapfpistolendichtung nach Anspruch 10, dadurch gekennzeichnet, daß das Schließglied (7) mit wenigstens einer axial vorstehenden Federzunge (5) versehen und durch Einschnappen der Federzunge (5) in eine Hinterschneidung des Dichtungsaufnahmegliedes (18) an demselben festlegbar ist.

12. Zapfpistolendichtung nach Anspruch 11, dadurch gekennzeichnet, daß mehrere Federzungen (5) gleichmäßig in Umfangsrichtung verteilt und jeweils mit wenigstens einer Durchbrechung (6) zum axialen Einsetzen eines Spannwerkzeuges versehen sind und daß die Federzungen (5) durch eine Betätigung des Spannwerkzeuges aus den Hinterschneidungen des Dichtungsaufnahmegliedes (18) ausrastbar sind.

13. Zapfpistolendichtung nach Anspruch 11-12, dadurch gekennzeichnet, daß die Federzungen (5) axial in Richtung des Kraftstoffbehälters weisend angeordnet sind.

## Claims

1. A seal for a petrol pump nozzle, for use in the filler neck (12), provided with an orifice of reduced diameter, of a fuel tank, comprising a sealing ring (8) of polymeric material which is provided with a sealing lip (4) which can be brought into engagement with the petrol pump nozzle, characterised in that the sealing ring (8) is accommodated in a supporting body (13) of essentially tubular configuration, in that the supporting body (13) is of elastic design at least in a part-region and can be introduced, by a reversible diameter reduction, through the orifice (14) into the filler neck (12), and in that the supporting body (13) can be brought into engagement and fixed in the axial direction with at least one radially inward-pointing projection (3) of the filler neck (12).

2. A seal according to claim 1 for a petrol pump nozzle, characterised in that the supporting body (13) is of two-part design and comprises an outer ring (1) composed of a flexible material and an inner ring (2) surrounded by the said outer ring and composed of an inflexible material, in that the inner ring (2) has a smaller outside diameter than the orifice (14) and in that the inner ring (2) can be fixed in axially non-displaceable fashion on the outer ring (1).

3. A seal according to claim 2 for a petrol pump nozzle, characterised in that the outer ring (1) is composed of soft rubber and the inner ring (2) is composed of sheet metal or a hard plastic.

4. A seal according to either of claims 2 and 3 for a petrol pump nozzle, characterised in that the outer ring (1) is provided with a supporting surface (10) which faces the orifice (14) and touches the inner ring (2), in that the inner ring (2) projects beyond the outer ring (1) with an extension which faces in the direction of the orifice and widens in the form of a hollow cone, and in that the extension is provided with at least one division (16) extending in the longitudinal direction and can be snapped in behind that part of the filler neck (12) which narrows the orifice (14).

5. A seal according to claim 4 for a petrol pump nozzle, characterised in that the supporting surface (10) has an inside diameter which widens conically in the direction of the orifice.

6. A seal according to any of claims 1 to 5 for a petrol pump nozzle, characterised in that the projection (3) is formed by at least two indentations of the filler neck (12) distributed uniformly in the circumferential direction.

7. A seal according to claim 6 for a petrol pump nozzle, characterised in that the indentations are of spherical configuration.

8. A seal according to any of claims 1 to 7 for a petrol pump nozzle, characterised in that the inner ring (2) is divided into two parts and comprises a seal-receiving member (18) and a closing member (7), in that the seal-receiving member (18) surrounds the sealing ring (8) with an angular profile on the side facing the fuel tank and the side facing radially outwards, and the closing member (7) surrounds it on the side facing the orifice, and in that the seal-receiving member (18) and the closing member (7) can be fixed immovably on one another.

9. A seal according to claim 8 for a petrol pump nozzle, characterised in that the closing member (7) has an inside diameter widened in the form of a hollow cone from the sealing ring (8) towards the orifice (14) and in that the smallest value of the inside diameter is essentially identical with the inside diameter of the sealing ring (8) in the region of the end facing the orifice (14).

10. A seal according to claim 9 for a petrol pump nozzle, characterised in that the closing member (7) is of tubular design and can be snapped into an undercut of the seal-receiving member (18).

11. A seal according to claim 10 for a petrol pump nozzle, characterised in that the closing member (7) is provided with at least one axially projecting spring tongue (5) and can be fixed on the seal-receiving member (18) by snapping the spring tongue (5) into an undercut of the said seal-receiving member.

12. A seal according to claim 11 for a petrol pump nozzle, characterised in that a plurality of spring tongues (5) are distributed uniformly in the circumferential direction and are in each case provided with at least one opening (6) for the axial insertion of a gripping tool and in that the spring tongues (5) can be disengaged from the undercuts of the seal-receiving member (18) by an actuation of the gripping tool.

13. A seal according to either of claims 11 and 12 for a petrol pump nozzle, characterised in that the spring tongues (5) are arranged to point axially in the direction of the fuel tank.

**Revendications**

1. Joint d'étanchéité pour pistolet distributeur de carburant, utilisable dans la tubulure de remplissage (12), pourvue d'une embouchure de diamètre réduit, d'un réservoir de carburant et comportant une bague d'étanchéité (8) en matière polymère, gui est pourvue d'une lèvre d'étanchéité (4) pouvant être amenée en prise avec le pistolet distributeur de carburant, caractérisé en ce que la bague d'étanchéité (8) est montée dans un corps de soutien (13) ayant une forme sensiblement tubulaire, en ce que le corps de soutien (13) est pourvu d'une nature élastique au moins dans une zone partielle et peut être introduit, au moyen d'une réduction réversible de diamètre, à travers l'embouchure (14) dans la tubulure de remplissage (12) et en ce que le corps de soutien (13) peut être amené en prise et fixé dans une direction axiale avec au moins une saillie (3) de la tubulure de remplissage (12) gui est orientée vers l'intérieur dans une direction radiale.

2. Joint d'étanchéité pour pistolet distributeur selon la revendication 1, caractérisé en ce que le corps de soutien (13) est réalisé en deux parties et comporte une bague extérieure (1) formée d'un matériau flexible et une bague intérieure (2) entourant la première et formée d'un matériau non flexible, en ce que la bague intérieure (2) a un plus petit diamètre extérieur que l'embouchure (14) et en ce que la bague intérieure (2) est fixée sur la bague extérieure (1) de façon axialement irréversible.

3. Joint d'étanchéité pour pistolet distributeur selon la revendication 2, caractérisé en ce que la bague extérieure (1) est formée de caoutchouc mou et la bague intérieure (2) est formée de tôle ou d'une matière plastique dure.

4. Joint d'étanchéité pour pistolet distributeur selon les revendications 2 ou 3, caractérisé en ce que la bague extérieure (1) est pourvue d'une surface d'appui (10) dirigée vers l'embouchure (14) et gui entre en contact avec la bague intérieure (2), en ce que la bague intérieure (2) dépasse de la bague extérieure (1) par un appendice s'élargissant en forme de cône creux et orienté en direction de l'embouchure et en ce que l'appendice est pourvu d'au moins une partie séparatrice (16) s'étendant dans la direction longitudinale et peut s'emboîter en arrière de la partie, rétrécissant l'embouchure (14), de la tubulure de remplissage (12).

5. Joint d'étanchéité pour pistolet distributeur selon la revendication 4, caractérisé en ce que la surface d'appui (10) a un diamètre intérieur s'élargissant en direction de l'embouchure avec un profil conique.

6. Joint d'étanchéité pour pistolet distributeur selon une des revendications 1 à 5, caractérisé en ce que la saillie (3) est constituée par au moins deux bombements de la tubulure de remplissage (12) gui sont répartis uniformément dans une direction circonférentielle.

7. Joint d'étanchéité pour pistolet distributeur selon la revendication 6, caractérisé en ce que les bombements sont profilés en forme de calottes.

8. Joint d'étanchéité pour pistolet distributeur selon une des revendications 1 à 7, caractérisé en ce que la bague intérieure (2) est réalisée en deux parties et comporte un organe récepteur de joint d'étanchéité (18) et un organe de fermeture (7), en ce que l'organe récepteur de joint d'étanchéité (18) entoure la bague d'étanchéité (8) par un profil anguleux du côté du réservoir de carburant et du côté dirigé radialement vers l'extérieur, et l'organe de fermeture (7) du côté dirigé vers l'embouchure, et en ce que l'organe récepteur de joint d'étanchéité (18) et l'organe de fermeture (7) peuvent être fixés mutuellement de façon irréversible.

9. Joint d'étanchéité pour pistolet distributeur selon la revendication 8, caractérisé en ce que l'organe de fermeture (7) a un profil de cône creux ayant un diamètre intérieur s'élargissant de la bague d'étanchéité (8) en direction de l'embouchure (14) et en ce que la valeur minimale du diamètre intérieur est sensiblement identique au diamètre intérieur de la bague d'étanchéité (8) dans la zone de l'extrémité dirigée vers l'embouchure (14).

10. Joint d'étanchéité pour pistolet distributeur selon la revendication 9, caractérisé en ce que l'organe de fermeture (7) a une forme tubulaire et peut être emboîté dans une dépouille arrière de l'organe récepteur de joint d'étanchéité (18).

11. Joint d'étanchéité pour pistolet distributeur selon la revendication 10, caractérisé en ce que l'organe de fermeture (7) est pourvu d'au moins une languette élastique (5) faisant saillie axialement et peut être fixé sur l'organe récepteur (18) de joint d'étanchéité par engagement de la languette élastique (5) dans une partie dépouillée de cet organe récepteur.

12. Joint d'étanchéité pour pistolet distributeur selon la revendication 11, caractérisé en ce que plusieurs languettes élastiques (5) sont réparties uniformément dans une direction circonférentielle et sont chacune pourvues d'au moins un évidement (6) permettant l'engagement axial d'un outil de serrage et en ce que les languettes élastiques (5) peuvent être dégagées des dépouilles arrière de l'organe récepteur (18) de joint d'étanchéité par une manoeuvre de l'outil de serrage.

13. Joint d'étanchéité pour pistolet distributeur selon les revendications 11 et 12, caractérisé en ce que les languettes élastiques (5) sont disposées en étant orientées axialement en direction du réservoir de carburant.

Fig. 1

Fig. 2

EP 0 357 874 B1